# EUROPEAN PATENT APPLICATION

(11) **EP 2 530 885 A1**
(43) Date of publication of application: **05.12.2012**
(21) Application number: 11290249.9
(22) Date of filing: 01.06.2011
(51) Int. Cl.: H04L 12/56

(54) **Shaping component and method for transporting a data stream offered at different qualities**

(71) Applicant: Alcatel Lucent, 75007 Paris (FR)
(72) Inventor: De Vleeschauwer, Bart, 9200 Dendermonde (BE); Huysegems, Rafael, 2800 Walem (BE)
(74) Representative: D'Halleweyn, Nele Veerle Trees Gertrudis

(57) **Abstract**

Shaping component for adaptive streaming of data available in a plurality of encodings having different qualities, through a network, comprising a shaper adapted to determine one or more transport parameters for an adaptive streaming session between a server or proxy and a client based on control information; and to receive and transmit to the client packets of the data transported during the adaptive streaming session according to the determined one or more transport parameters.

## Description

### Technical field

The present invention relates to the field of adaptive streaming of data, in particular media content, available in a plurality of encodings having a different quality, and in particular to the field of transporting video over HTTP via HTTP adaptive streaming.

### Background

It is well known to transport video over HTTP via HTTP adaptive streaming. A disadvantage of this technique is that when several HTTP adaptive streaming sessions are competing for bandwidth, the quality used within a session can oscillate significantly. The quality at the end user's side will vary significantly in case of congestion. Because the delivery of the packets is done over best effort, packets may be lost and no guarantees are given on the delivery of a single packet. When a packet is lost, the TCP window will be adjusted and the bit rate is decreased. The client fully controls the streaming session, managing the on-time request and play-out of the sequence of segments of the stream. The client may adjust bitrates or other attributes, for example to react to changes of the network state (when packets are lost, the TCP window will decrease which will result in a decreased bandwidth), device state or the user preferences.

### Summary of the invention

The object of the invention is to provide a shaping component and a method for adaptive streaming of data offered in a plurality of encodings having a different quality, which method and shaping component limit the "burstiness" or oscillations of the flows and the packet losses.

According to an embodiment of the invention there is provided a shaping component for adaptive streaming of data available in a plurality of encodings having a different quality. The shaping component comprises a shaper adapted to determine one or more transport parameters for an adaptive streaming session between a server or proxy and a client based on control information; and to receive and transmit packets of the data transported during the adaptive streaming session to the client according to the determined one or more transport parameters.

The control information preferably comprises any one or more of the following information items: information on the different qualities of the encodings, information on a user profile of the client, information on the network between the shaping component and the client (such as bandwidth and topology), information on the size of intermediate buffers between the shaping component and the client, information on other sessions in the network, information on the data, information on the client application such as the buffer level at the client side.

According to a preferred embodiment the control information comprises information on the different qualities of the encodings and anyone or more of the following items: information on a user profile of the client, information on the network between the shaping component and the client (such as bandwidth and topology), information on the size of intermediate buffers between the shaping component and the client, information on other sessions in the network, information on the data, information on the client application such as the buffer level at the client side.

According to an advantageous embodiment the control information comprises information on the different qualities of the encodings and the one or more transport parameters comprise the bit rate for the transmitting of the packets. The shaper is then preferably adapted to adjust the bit rate in function of the different available qualities.

The one or more transport parameters preferably include any one or more of the following parameters: a bit rate for the transmitting of the packets, a size of a queue in which the packets are received.

The shaping component is typically adapted for HTTP adaptive streaming, but could also be used with other adaptive streaming techniques. The data is typically video content but could also be other content such as audio content.

According to a further developed embodiment the shaping component comprises a priority configurator adapted to add priority information to the packets transmitted by the shaper.

The invention also relates to a system comprising one or more nodes provided with an embodiment of the shaping component as disclosed above. The system typically comprises an adaptive streaming node, e.g. a server or a proxy, storing the data and adapted to perform adaptive streaming of packets of the data, and a client separated from the adaptive streaming node by a network. The one or more shaping components are provided such that at least one thereof receives the packets from the adaptive streaming node and transmits the packets to the client according to the determined one or more transport parameters. The shaping component(s) may be integrated in the adaptive streaming node or linked to the adaptive streaming node or may be built-in in another node of the network.

According to an embodiment of the invention the method comprises detecting or being informed of an adaptive streaming session between a server or proxy and a client; determining at a shaping component one or more transport parameters of the adaptive streaming session based on control information; and receiving at the shaping component and transmitting to the client packets of the data of the adaptive streaming session according to the determined one or more transport parameters. Such a detecting can e.g. be done by monitoring the packets passing through the shaping component. It could e.g. be decided that a session is present when a manifest file is requested by a client application. Alternatively, when the shaping component is integrated in the server, the shaping component can be simply informed of the start of a session or can be informed because it is itself involved in setting up the session.

According to a preferred embodiment of the method the control information comprises information on the different qualities of the encodings and the one or more transport parameters comprise the bit rate for the transmitting of the packets. The bit rate is then preferably adjusted in function of the different available qualities.

Further embodiments of the method may include adding priority information to the packets transmitted by the shaping component.

Finally the invention relates to a computer medium storing programming code for performing one or more of the steps of an embodiment of the method of the invention.

The accompanying drawings are used to illustrate presently preferred non-limiting exemplary embodiments of the present invention. The above and other advantages of features and objects of the invention will become more apparent and the invention will be better understood from the following detailed description when read in conjunction with the accompanying drawings in which:
Figure 1 illustrates the HTTP adaptive streaming concept and illustrates how embodiments of the present invention can be applied in such a concept; and
Figure 2 illustrates schematically an embodiment of a shaping component of the invention.

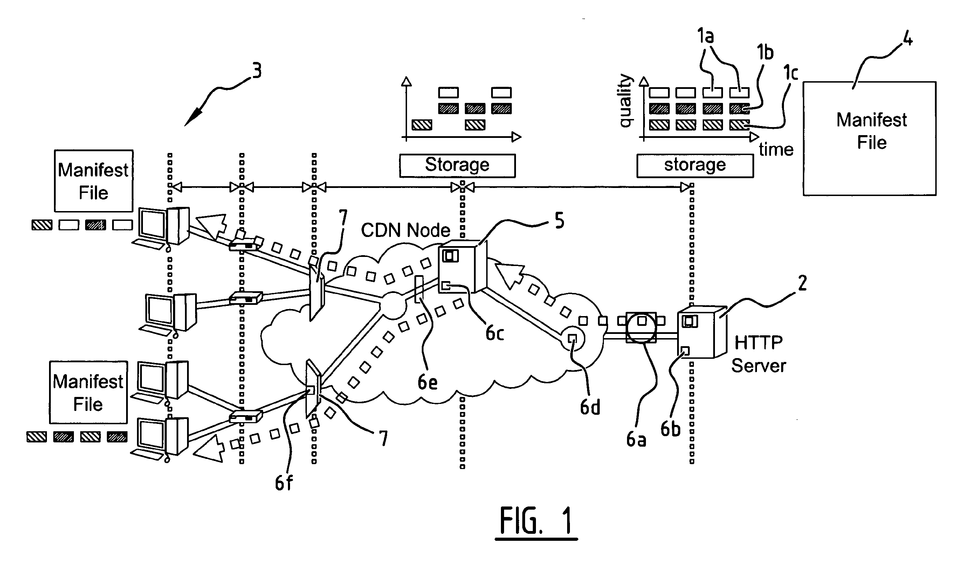

The embodiments illustrated below use the HTTP adaptive streaming concept but the skilled person will understand that the scope of protection of the invention also extends to other embodiments using adaptive streaming of content, i.e. using a hybrid delivery method that acts like streaming but is based on progressive download of content. Note that HTTP adaptive streaming is not streaming per se, but a series of downloads of small segments of a media file. When using HTTP adaptive streaming video is encoded in several bit rates and segmented in pieces 1a-1c of typically a number of seconds, see figure 1. In the example, the segments 1a represent a first quality, the segments 1b a second lower quality and the segments 1c a third lowest quality. The segments are stored on a HTTP server 2. Delivery is done over standard HTTP and a client application at the client side 3 monitors the network bandwidth and determines which quality version/bit rate to request for a segment based on this measured bandwidth and other pieces of information, e.g. the buffer filling at the client side. The information about the available versions or qualities of the segments is typically located in a so called manifest file 4 (an alternative name for manifest file is a playlist file). Delivery can e.g. be done from the central HTTP server 2 or via a CDN network comprising CDN nodes 5. Several instances of adaptive streaming technology are possible and have been developed by Microsoft, Apple and Adobe and it is being standardized in MPEG, 3GPP, OIPF, ... .

To make adaptive streaming scalable today, typically the CDN approach is followed, where users are redirected to a nearby CDN node. CDN nodes are typically loaded with protocols such as HTTP etc.

A patent application in the name of the applicant EP 11 292 218.4 discloses to schedule the delivery of the segments to influence the selection that will be made by the heuristic algorithm running in the client component. The technique of embodiments of the present invention differs in that it targets the shaping of the transmission of the individual packets in an adaptive streaming session, eliminates the competition between several connections, and allows limiting the impact of "bursty" adaptive streaming sessions over a network. The object of embodiments of the invention is to eliminate any unwanted effects and packet loss in the aggregation network. Embodiments of the present invention artificially limit the effective bandwidth that an adaptive streaming session will get, not making assumptions on how the client side algorithm would work but creating a "virtual channel" between the shaping component and the client over which all the packets belonging to the session will be sent.

Embodiments of the present invention are using a shaping of the traffic of HTTP adaptive streaming sessions, optionally combined with sending the segments over a high priority. This shaping is typically done using a shaping component which takes in the packets and emits the packets according to a specified rate. Additionally, the shaping component may be adapted to drop a packet, e.g. when the input rate is a lot higher that the output rate. This shaping is done on a per-session basis. Shaping in this context is determining how the packet or each individual packet of a session will actually be transmitted. During the same session a first set of packets of a session may be sent at a first bit rate and a next set of packets may be sent at a second bit rate. Note that the quality of the packets may also differ but this will then e.g. be under the influence of the client application. The client application typically downloads a quality for one segment and will vary the quality of the subsequent segments based on the download time, an estimate of the bandwidth and the buffer filling. The shaping component may adapt the bit rate at which the packets are delivered to the client application, e.g. when a new session is started in the network. For completeness it is noted that the buffer in the shaping component will be adapted to store incoming packets and will tend to fill up increasingly if the bit rate at which the packets arrive in the shaping component is higher than the determined bite rate at which the packets are transmitted by the shaping component.

The shaping may be done centrally or in a distributed fashion. The shaping component could e.g. be located in any one or more of the following locations, see figure 1:
- in a the link between the http server 2 and the network, see reference numeral 6a;
- integrated in the http server 2, see reference numeral 6b;
- integrated in a CDN Node 5 or Proxy Server, see reference numeral 6c;
- integrated in a router in the network, see reference numeral 6d;
- on a link in the network, see reference numeral 6e;
- on an access node 7 in the network, see reference numeral 6f.

According to a possible embodiment the shaping component may be introduced before a bottleneck link. In case of a distributed implementation a number of shaping components could be provided e.g. before a number of bottleneck links.

The rationale on which to shape the traffic can be based on one or more of the following control information elements:
- Manifest file information: the manifest file describes which quality versions/bandwidths are available for a piece of content;
- user profile information, such as information on the user subscription and user behaviour, e.g. a maximum bandwidth, the likelihood of a user to pause a movie, ... ;
- information on the available network bandwidth and topology, such as information on the bandwidth that is available between the server/proxy/shaping component and the client and/or information on the links that would need to be crossed;

- information on intermediate buffers, in particular on the size thereof, e.g. the size of the intermediate buffers on the access node 7;
- the characteristics of an access-link 7: high/low performance, mobile/fixed, average throughput, delay characteristics, etc.
- information on competing sessions in the network; e.g. the shaping could be done with as a goal to divide the bandwidth in a fair fashion over all the users that share the same part of the network;
- information on the content and in particular on the origin thereof; this would allow embodiments of the invention to shape the bandwidth in a different way depending on the served content, e.g. content from one content provider could be shaped at a higher rate than that of another content provider;
- client application information provided/estimated from the client, e.g. buffer filling at the client.

Embodiments of the shaping component will thus be adapted to determine how to shape the rate depending on a variety of control information elements, including general information from the session and the available bit rates that could be found in the manifest file, information on the user subscription, information on the other sessions that are being consumed in the network, information on the content that is delivered, information on the network, including available bandwidth/capacity of the links and access link or information on the congestion state. This shaping component could e.g. be deployed on an intermediate proxy. Optionally, information on the segments that are available could also be used in determining the rate. It is assumed that the shaping component receives an input from an adaptive streaming server and/or one or more adaptive streaming proxy(s) and/or through a network monitoring system and/or by the client application and/or by another management entity. The shaping component could be integrated in a proxy or server but could also be located somewhere on an intermediate node in the network.

Furthermore, according to embodiments of the invention, the shaped traffic could be sent with a higher priority than ordinary traffic, with the goal to limit or avoid packet loss of the shaped packets in the network itself and restrict any packet loss to losses in the buffer of the traffic shaper. Such embodiments would have the advantage that the TCP connections are no longer competing for bandwidth and that the quality variations that can be associated with those scenarios will no longer occur. A further advantage is that a network provider deploying an embodiment of the system of the invention has the ability to enforce more fairness and to have better control of the adaptive streaming sessions in its network. By using embodiments of the invention, a "virtual channel" can be created for each session and the bandwidth available on this channel would be under control of the network provider. Additionally, embodiments of the method of traffic shaping of the invention can limit or eliminate packet loss on intermediate nodes with small buffers, e.g. the access node.

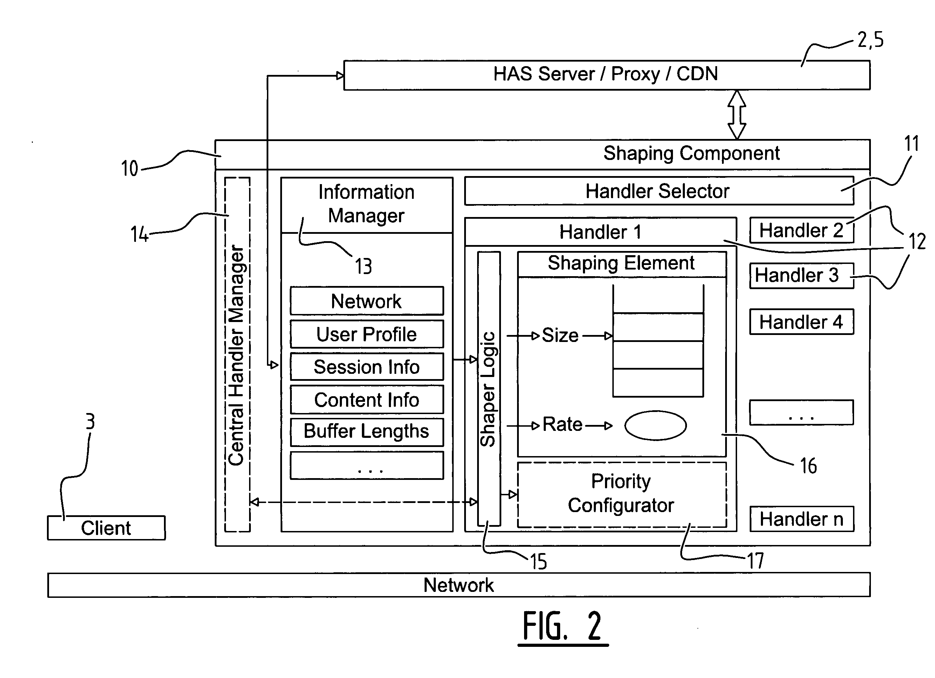

Figure 2 depicts the building blocks of a first embodiment of a shaping component of the invention. The shaping component 10 comprises a handler selector 11, a handler or shaper 12 for every session, a control information manager 13, and a central handler manager 14.

The handler selector 11 is adapted to receive incoming packets and to determine which handler 12 should handle the packets. Conceptually, one can imagine each adaptive streaming session to have one handler 12, but the plurality of handlers 12 could also be implemented as one handler section. Determining which packets should be sent to which handler 12 could e.g. be done by connecting the shaping component to a server/proxy 2, 5 delivering the adaptive streaming sessions that could give details on which packets belong to which session.

The handler or shaper 12 comprises shaper logic 15 adapted to determine transport parameters that the corresponding session should have. The transport parameters are based on control information provided by the control information manager 13. Transport parameters contain e.g. the size of a virtual queue and the output rate for the queue, optionally combined with the priority over which the packets should be delivered. According to an alternative embodiment the shaper logic of all the handlers 12 could be coordinated by an optional central management block. The shaping element 16 contains a virtual queue with a depth adapted for receiving the arriving packets of the corresponding session. The shaping element 16 is further adapted for transmitting the packets at the bit rate determined by the shaper logic 15. The handler 12 may further comprise a priority configurator 17 adapted to set the priority of the packets or enforce another mechanism that gives the packets a different treatment than other packets, such as putting it in a specific VLAN. Also other QoS mechanisms could be used, such as using DiffServ codepoint in an IP, by using an MPLS traffic class. This configurator 17 is optional e.g. depending on whether the network supports priority handling.

The control information manager 13 is adapted to manage information that the shaper logic 15 and quality configuration components 17 can use. This control information may include network information (such as bandwidth and topology), information on the user profile and subscription, information on the session (e.g. available qualities, ...), content information and data on the buffers in the network (e.g. on the DSL line), information on other sessions in the network, information on the data, information from/on the client application (e.g. buffer level).

The central handler manager 14 is an optional component adapted to coordinate all the handlers and make sure that they are in-sync. As explained above certain functionalities such as the shaper logic could also be provided centrally and could e.g. be added to the central handler manager 14. Note that there could also be provided a central manager to coordinate several shaping components distributed over the network and/or to allow different shaping components to exchange information.

Now a further embodiment will be described where the assumption is made that the bottleneck could be pinpointed to one individual link. According to this embodiment the shaping component is adapted
- to set the rate higher than the highest possible rate of the session, e.g. to 1.5 times the highest possible rate (50 % overprovisioning), when there is no congestion; and
- to share the available bandwidth over all the sessions when there would be congestion.

For sharing the bandwidth embodiments could start by sharing the bandwidth equally over all sessions. More complex embodiments could be envisioned where the rate that is assigned to each session is then combined with the information on which quality versions are available. For instance if the share that a session would get when the bandwidth is divided equally over the available sessions is 2 Mbps and there is only a 1.5 Mbps version and a 2.5 Mbps version of the movie, the session could assign e.g. 1.8 Mbps and the remaining 200 kbps could be given to another session. The queue size is preferably chosen to be high enough never to loose a packet and/or to limit the adverse effect of very small buffers.

According to a further developed embodiment, in assigning the rates, the shaping component can take into account a statistical multiplexing factor. This factor may take into account that for each session the shaping component reserves slightly more bandwidth than is actually required and that users may e.g. pause the session whilst they are watching a video. In that way the shaping component might assign additional bandwidth for a session even though the total available bandwidth for all sessions is strictly speaking too low for allowing the assigning of this additional bandwidth.

Embodiments of the invention greatly limit the adverse effect of congestion and bandwidth competition for HTTP adaptive streaming sessions and provide a network operator with a means to enforce fairness and have more control, potentially opening the door for charging extra money for specific features such as guaranteeing a high quality. Further quality oscillations for HTTP adaptive streaming traffic can be limited or avoided.

Whilst the principles of the invention have been set out above in connection with specific embodiments, it is to be understood that this description is merely made by way of example and not as a limitation of the scope of protection which is determined by the appended claims.

## Claims

1. Shaping component for adaptive streaming of data available in a plurality of encodings having different qualities, through a network, comprising a shaper adapted to determine one or more transport parameters for an adaptive streaming session between a server or proxy and a client based on control information; and
to receive and transmit to the client packets of the data transported during the adaptive streaming session according to the determined one or more transport parameters.

2. Shaping component according to claim 1, wherein the control information comprises any one or more of the following information items:
- information on the different qualities of the encodings,
- information on a user profile of the client,
- information on the network between the shaping component and the client (such as bandwidth and topology),
- information on the size of intermediate buffers between the shaping component and the client,
- information on other sessions in the network,
- information on the data;
- information from/on the client application.

3. Shaping component according to any of the previous claims, wherein the control information comprises information on the different qualities of the encodings, wherein the one or more transport parameters comprise the bit rate for the transmitting of the packets, and wherein the shaper is adapted to adjust the bit rate in function of the different available qualities.

4. Shaping component according to any of the previous claims, wherein the one or more transport parameters include any one or more of the following parameters: a bit rate for the transmitting of the packets, a size of a queue in which the packets are received.

5. Shaping component according to any of the previous claims, wherein the shaping component is adapted for HTTP adaptive streaming.

6. Shaping component according to any of the previous claims, wherein the data is video content.

7. Shaping component according to any of the previous claims, further comprising a priority configurator adapted to add priority information to the packets transmitted by the shaper.

8. System comprising one or more shaping components of any of the previous claims, an adaptive streaming node storing the data and adapted to perform adaptive streaming of packets of the data, a client separated from the adaptive streaming node by a network, wherein the one or more shaping component are provided such that at least one thereof receives the packets from the adaptive streaming node and transmits the packets to the client according to the determined one or more transport parameters.

9. System of claim 8, wherein a shaping component of the one or more shaping components is integrated in the adaptive streaming node or linked to the adaptive streaming node or built-in in a node in the network.

10. Method for adaptive streaming of data through a network, comprising:
- detecting or being informed of an adaptive streaming session, in particular an HTTP adaptive streaming session, between a server or proxy and a client;
- determining at a shaping component one or more transport parameters of the adaptive streaming session based on control information;
- receiving at the shaping component and transmitting to the client packets of the data of the adaptive streaming session according to the determined one or more transport parameters.

11. Method according to claim 10, wherein the control information comprises any one or more of the following information items:
- information on the different qualities of the encodings,
- information on a user profile of the client,
- information on the network between the shaping component and the client (such as bandwidth and topology),
- information on the size of intermediate buffers between the shaping component and the client,
- information on other sessions in the network,
- information on the data;
- information from/on the client application.

12. Method according to claim 10 or 11, wherein the control information comprises information on the different qualities of the encodings, wherein the one or more transport parameters comprise the bit rate for the transmitting of the packets, and wherein the bit rate is adjusted in function of the different available qualities.

13. Method according to any of claims 10-12, wherein the one or more transport parameters include any one or more of the following parameters: a bit rate for the transmitting of the packets, a size of a queue in which the packets are received.

14. Method according to any of the claims 10-13, wherein priority information is added to the packets before being transmitted or wherein another mechanism is enforced whereby the transmitted packets are given a different treatment compared to other packets not sent by the shaping component.

15. Computer medium storing programming code for performing one or more of the steps of the method of any of the claims 10-14.

## Amended claims

### Amended claims in accordance with Rule 137(2) EPC.

**1.** Shaping component for adaptive streaming of data available in a plurality of encodings representing different qualities, through a network, comprising a shaper adapted to determine one or more transport parameters for an adaptive streaming session between a server or proxy and a client based on control information; and
to receive and transmit to the client packets of the data transported during the adaptive streaming session according to the determined one or more transport parameters.

**2.** Shaping component according to claim 1, wherein the control information comprises any one or more of the following information items:
- information on the different qualities of the encodings,
- information on a user profile of the client,
- information on the network between the shaping component and the client,
- information on the size of intermediate buffers between the shaping component and the client,
- information on other sessions in the network,
- information on the data;
- information from/on the client application.

**3.** Shaping component according to any of the previous claims, wherein the control information comprises information on the different qualities of the encodings, wherein the one or more transport parameters comprise the bit rate for the transmitting of the packets, and wherein the shaper is adapted to adjust the bit rate in function of the different available qualities.

**4.** Shaping component according to any of the previous claims, wherein the one or more transport parameters include any one or more of the following parameters: a bit rate for the transmitting of the packets, a size of a queue in which the packets are received.

**5.** Shaping component according to any of the previous claims, wherein the shaping component is adapted for Hypertext Transfer Protocol, HTTP adaptive streaming.

**6.** Shaping component according to any of the previous claims, wherein the data is video content.

**7.** Shaping component according to any of the previous claims, further comprising a priority configurator adapted to add priority information to the packets transmitted by the shaper.

**8.** System comprising one or more shaping components of any of the previous claims, an adaptive streaming node storing the data and adapted to perform adaptive streaming of packets of the data, a client separated from the adaptive streaming node by a network, wherein the one or more shaping component are provided such that at least one thereof receives the packets from the adaptive streaming node and transmits the packets to the client according to the determined one or more transport parameters.

**9.** System of claim 8, wherein a shaping component of the one or more shaping components is integrated in the adaptive streaming node or linked to the adaptive streaming node or built-in in a node in the network.

**10.** Method for adaptive streaming of data through a network, comprising:
- detecting or being informed of an adaptive streaming session, between a server or proxy and a client;
- determining at a shaping component one or more transport parameters of the adaptive streaming session based on control information;
- receiving at the shaping component and transmitting to the client packets of the data of the adaptive streaming session according to the determined one or more transport parameters.

**11.** Method according to claim 10, wherein the control information comprises any one or more of the following information items:
- information on the different qualities of the encodings,
- information on a user profile of the client,
- information on the network between the shaping component and the client,
- information on the size of intermediate buffers between the shaping component and the client,
- information on other sessions in the network,
- information on the data;
- information from/on the client application.

**12.** Method according to claim 10 or 11, wherein the control information comprises information on the different qualities of the encodings, wherein the one or more transport parameters comprise the bit rate for the transmitting of the packets, and wherein the bit rate is adjusted in function of the different available qualities.

**13.** Method according to any of claims 10-12, wherein the one or more transport parameters include any one or more of the following parameters: a bit rate for the transmitting of the packets, a size of a queue in which the packets are received.

**14.** Method according to any of the claims 10-13, wherein priority information is added to the packets before being transmitted or wherein another mechanism is enforced whereby the transmitted packets are given a different treatment compared to other packets not sent by the shaping component.

**15.** Computer medium storing programming code for performing the steps of the method of any of the claims 10-14.
